# EUROPEAN PATENT SPECIFICATION

(11) **EP 4 067 559 B1**
(45) Date of publication and mention of the grant of the patent: **17.09.2025**
(21) Application number: 20894389.4
(22) Date of filing: 23.10.2020
(51) Int. Cl.: D06F 58/22, B01D 46/10, B01D 46/24

(54) **CLOTHES DRYING DEVICE**
KLEIDERTROCKNERVORRICHTUNG
DISPOSITIF DE SÉCHAGE DE VÊTEMENTS

(30) Priority: 26.11.2019 CN 201911175993; 26.11.2019 CN 201911175996; 26.11.2019 CN 201911177009; 26.11.2019 CN 201911177013
(43) Date of publication of application: 05.10.2022
(60) Divisional application: 25195438.4
(73) Proprietor: Qingdao Haier Drum Washing Machine Co., Ltd., Qingdao Shandong 266101 (CN); Haier Smart Home Co., Ltd., Qingdao, Shandong 266101 (CN)
(72) Inventor: LI, Quande, Qingdao, Shandong 266101 (CN); BING, Jindong, Qingdao, Shandong 266101 (CN); WANG, Jian, Qingdao, Shandong 266101 (CN); YANG, Kun, Qingdao, Shandong 266101 (CN); LIU, Xiujiao, Qingdao, Shandong 266101 (CN)
(74) Representative: Pellengahr, Maximilian Rudolf
(86) International application number: PCT/CN2020/123030
(87) International publication number: WO 2021/103869

(56) References cited:
- EP-A1- 0 395 484
- EP-A1- 2 745 909
- CN-A- 1 133 074
- CN-A- 1 133 074
- CN-A- 102 535 130
- CN-A- 104 204 336
- CN-U- 208 649 732
- JP-A- H07 204 398
- KR-A- 20110 123 345
- US-A- 5 701 684
- US-A1- 2011 225 838
- US-A1- 2012 144 687

## Description

### FIELD

The present invention relates to the technical field of clothing drying apparatus, and specifically relates to a clothing drying apparatus.

### BACKGROUND

A clothing dryer is a cleaning household appliance that instantly evaporates and dries moisture in the washed clothing. The clothing dryer generally includes a shell, a motor, a fan, a heater and a drum. The shell of the clothing dryer is provided with a wind inlet and a wind outlet. An interior of the clothing dryer is formed with a wind flow route, and the fan draws natural wind into the clothing dryer from the wind inlet. After being heated by the heater, the natural wind forms hot wind which enters the interior of the drum. At the same time, the motor drives the drum to rotate, so that the clothing fully contacts with the hot wind. The hot wind mixes with the water vapor in the drum to form humid wind. The humid wind passes through the drum and is discharged out of the clothing dryer from the wind outlet.

A patent application document, publication number of which is CN 1133074 A (family member of patent document US 5 701 684 A), discloses a clothing dryer. The drum of this clothing dryer has an air inlet and an air outlet. A fiber lint filter, a collection container and a fiber lint removal part are arranged at positions adjacent to the air outlet. The fiber lint filter can rotate together with the drum. During the rotation of the drum, a wind flow will bring the fiber lint and other impurities in the drum to a surface of the fiber lint filter when it flows out of the outlet of the drum. The lint removal part is connected to an inner wall of the shell and is located above a clothing throw-in port. During the operation of the clothing dryer, a door hinged to a front panel is closed, and the lint removal part scrapes the lint accumulated on the surface of the fiber lint filter into the collection container formed by an inner cavity inside the door of the clothing dryer.

However, in the existing clothing dryers, the fiber lint removal part is directly arranged on the clothing throw-in port of the clothing dryer, and the collection container is arranged inside the door of the clothing dryer; the fiber lint removal part and the collection container are arranged at scattered positions on the clothing dryer and occupy a large space, which affects an overall layout of the clothing dryer and makes an overall structure of the clothing dryer not concise, thereby downgrading the user experience in use.

Accordingly, there is a need in the art for a new clothing drying apparatus to solve the above problem.

### SUMMARY

In order to solve the above problem in the prior art pointed out in the first background art, that is, to solve the problem in existing clothing dryers that the fiber lint removal part and the collection container are arranged at scattered positions on the clothing dryer and occupy a large space, which affects an overall layout of the clothing dryer and makes an overall structure of the clothing dryer not concise, thereby downgrading the user experience in use, the first technical solution of the present disclosure provides a clothing drying apparatus.

The clothing drying apparatus provided by the present invention includes a cabinet assembly, an installation member, a drying drum, a lint cleaning member, a lint collecting member and an annular filter member; the annular filter member is connected to the drying drum and can rotate when driven by the drying drum; the installation member is arranged on the cabinet assembly, and the lint cleaning member and the lint collecting member are both arranged on the installation member; during the rotation of the annular filter member, the lint cleaning member can clean up the lint on the annular filter member, and the lint collecting member can collect the cleaned up lint.

According to the present invention, the lint cleaning member includes a connecting rod and a scraper that are connected, in which the connecting rod is snap-fit on the installation member, and the scraper is arranged close to or against the annular filter member.

According to the present invention, the lint collecting member includes a lint collecting box which is detachably connected with the installation box and a lint collecting port of the lint collecting box is located below the lint cleaning member.

As a preferred technical solution of the above clothing drying apparatus provided by the present invention, the lint collecting port is arranged gradually opened in a direction approaching the lint cleaning member.

As a preferred technical solution of the above clothing drying apparatus provided by the present invention, the annular filter member includes an annular filter bracket and an annular filter screen, the annular filter bracket is connected with the drying drum, and the annular filter screen is detachably connected with the annular filter bracket.

As a preferred technical solution of the above clothing drying apparatus provided by the present invention, the annular filter bracket is formed with an annular accommodating groove, the annular filter bracket is provided with a plurality of snap-fit members, and the annular filter screen is snap-fit in the annular accommodating groove through the plurality of snap-fit members.

As a preferred technical solution of the above clothing drying apparatus provided by the present invention, an inner surface of the annular filter screen is set flush with an inner surface of the annular filter bracket.

As a preferred technical solution of the above clothing drying apparatus provided by the present invention, the annular filter screen includes a plurality of arc-shaped filter screens, the plurality of arc-shaped filter screens are all detachably connected with the annular filter bracket, and the plurality of arc-shaped filter screens are arranged in sequence in a circumferential direction of the annular filter bracket.

As a preferred technical solution of the above clothing drying apparatus provided by the present invention, arc lengths of all the arc-shaped filter screens are equal.

As a preferred technical solution of the above clothing drying apparatus provided by the present invention, the clothing drying apparatus is a front-open drum clothing dryer.

In the clothing drying apparatus provided by the present invention, the lint cleaning member and the lint collecting member are both arranged on the installation member, and the installation member is arranged on the cabinet assembly, so that the lint cleaning member and the lint collecting member are arranged at concentrated positions in the clothing dryer and occupy a smaller space, which is advantageous for optimizing the overall layout of the clothing dryer and makes the overall structure of the clothing dryer concise, while also improving the user experience in use.

Further, in the clothing drying apparatus provided by the present invention, the connecting rod of the lint cleaning member is snap-fit on the installation member, the scraper of the lint cleaning member is arranged close to or against the annular filter member; the lint collecting box is detachably connected with the installation member, and the lint collecting port of the lint collecting box is located below the lint cleaning member. When it is necessary to process the lint and other impurities in the lint collecting box, the lint collecting box can be removed from an installation box to facilitate the processing of the collected lint and other impurities.

### BRIEF DESCRIPTION OF DRAWINGS

The clothing drying apparatus of the present invention will be described below with reference to the accompanying drawings. In the drawings:
FIG. 1 is a schematic structural view of the clothing drying apparatus in the first embodiment;
FIG. 2 is a first exploded view of the clothing drying apparatus in the first embodiment;
FIG. 3 is a second exploded view of the clothing drying apparatus in the first embodiment;
FIG. 4 is a schematic structural view of the clothing drying apparatus in the first embodiment;
FIG. 5 is a schematic assembly view of the clothing drying apparatus in the first embodiment;
FIG. 6 is a schematic structural view of a first support member in the clothing drying apparatus in the first embodiment;
FIG. 7 is a schematic structural view of an annular support frame in the clothing drying apparatus in the first embodiment;
FIG. 8 is a schematic structural view of an installation box in the clothing drying apparatus in the first embodiment;
FIG. 9 is a schematic structural view of a lint cleaning member in the clothing drying apparatus in the first embodiment;
FIG. 10 is a schematic structural view of a lint collecting box in the clothing drying apparatus in the first embodiment;
FIG. 11 is a schematic structural view of an annular filter bracket in the clothing drying apparatus in the first embodiment; and
FIG. 12 is a schematic structural view of an arc-shaped filter screen in the clothing drying apparatus in the first embodiment.

List of reference signs:
1: front cover plate; 2: front panel; 21: clothing throw-in port; 31: door lock; 32: door hinge; 41: first support member; 42: second support member; 421: annular support frame; 422: installation box; 5: drying drum; 6: lint cleaning member; 61: connecting rod; 62: scraper; 7: lint collecting box; 71: gripping structure; 8: annular filter member; 81: annular filter bracket; 82: arc-shaped filter screen.

### DETAILED DESCRIPTION

Preferred embodiments of the present disclosure will be described below with reference to the accompanying drawings. It should be understood by those skilled in the art that these embodiments are only used to explain the technical principle of the present disclosure, and are not intended to limit the scope of protection of the present disclosure. For example, although the lint collecting member and the lint cleaning member in the drawings are installed on a right side of the support mechanism, this positional relationship is not invariable, and those skilled in the art can make adjustments thereto as needed so as to adapt to specific application scenes. For example, the lint collecting member and the lint cleaning member may be installed on an upper side, a left side or another position of the support mechanism, or the lint collecting member and the lint cleaning member may also be both installed at different positions in the support mechanism at the same time.

It should be noted that in the description of the present disclosure, terms indicating directional or positional relationships, such as "center", "upper", "lower", "left", "right", "vertical", "horizontal", "inner", "outer" and the like, are based on the directional or positional relationships shown in the accompanying drawings. They are only used for ease of description, and do not indicate or imply that the device or element must have a specific orientation, or be constructed or operated in a specific orientation, and therefore they should not be considered as limitations to the present disclosure. In addition, terms "first", "second" and "third" are only used for descriptive purposes, and should not be interpreted as indicating or implying relative importance.

In addition, it should also be noted that in the description of the present disclosure, unless otherwise clearly specified and defined, terms "install", "connect" and "connection" should be understood in a broad sense; for example, the connection may be a fixed connection, or may also be a detachable connection, or an integral connection; it may be a mechanical connection, or an electrical connection; it may be a direct connection, or an indirect connection implemented through an intermediate medium, or it may be internal communication between two elements. For those skilled in the art, the specific meaning of the above terms in the present disclosure can be interpreted according to specific situations.

In order to solve the above problem in the prior art pointed out in the first background art, that is, to solve the problem in existing clothing dryers that the fiber lint removal part and the collection container are arranged at scattered positions on the clothing dryer and occupy a large space, which affects an overall layout of the clothing dryer and makes an overall structure of the clothing dryer not concise, thereby downgrading the user experience in use, the first embodiment provides a clothing drying apparatus.

A clothing drying apparatus provided by the first embodiment includes a cabinet assembly, an installation member, a drying drum 5, a lint cleaning member 6, a lint collecting member and an annular filter member 8; the annular filter member 8 is connected with the drying drum 5 and can rotate when driven by the drying drum 5; the installation member is arranged on the cabinet assembly, and the lint cleaning member 6 and the lint collecting member are both arranged on the installation member; during the rotation of the annular filter member 8, the lint cleaning member 6 can clean up the lint on the annular filter member 8, and the lint collecting member can collect the cleaned up lint.

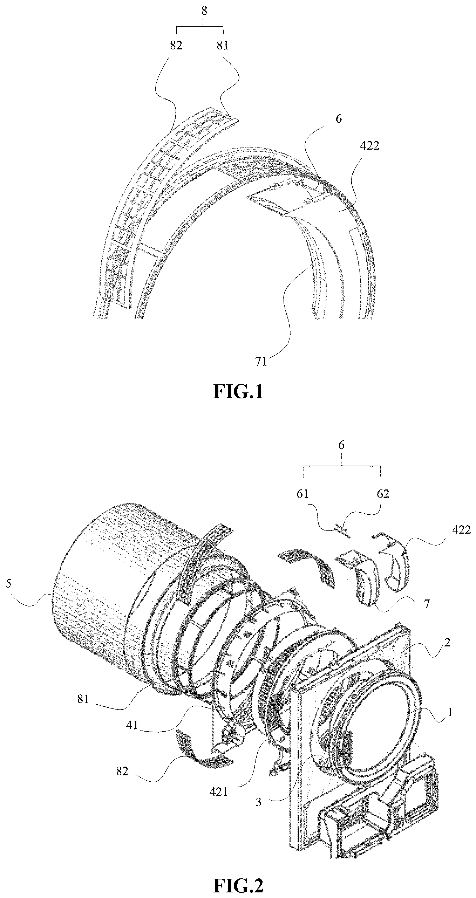

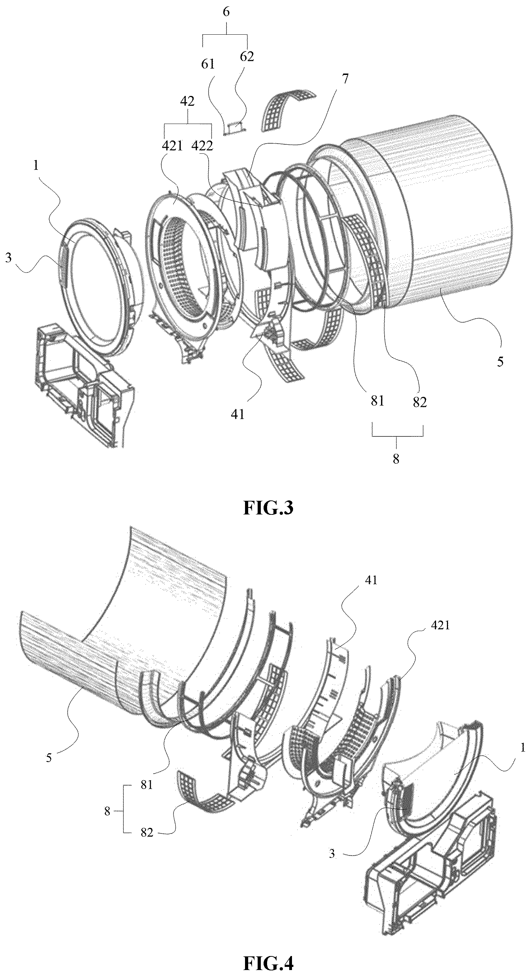

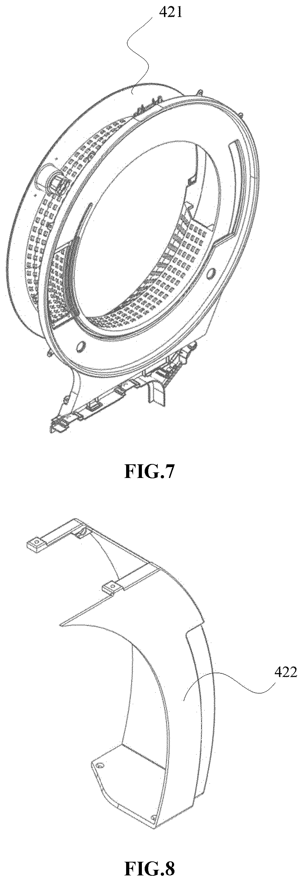

Exemplarily, the cabinet assembly of the present embodiment may be integrated, or the cabinet assembly of the present embodiment may include a cabinet and a support mechanism arranged on the cabinet, as shown in FIGS. 1, 2, 3, 4, 5, 6 and 7; the installation member may be an installation box 422 shown in FIG. 8 or other types of brackets or bases.

A clothing drying apparatus provided by the present embodiment includes a cabinet (not shown in the figure) and a drying drum 5; a front panel 2 of the cabinet is formed with a clothing throw-in port 21, and the front panel 2 is also provided with a support mechanism which is located between the front panel 2 and the drying drum 5; the clothing drying apparatus further includes a lint cleaning member 6, a lint collecting member and an annular filter member 8; the annular filter member 8 is connected with the drying drum 5 and can rotate when driven by the drying drum 5; the lint cleaning member 6 is arranged on the support mechanism, and the lint collecting member is completely arranged inside the support mechanism or on a rear side of the support mechanism; the lint cleaning member 6 is arranged to be capable of cleaning up the lint on the annular filter member 8 when the annular filter member 8 rotates so that the lint can be collected by the lint collecting member.

The drying drum 5 is connected with the annular filter member 8 at an end toward the front panel 2, so when a motor in the clothing drying apparatus drives the drying drum 5 to rotate, the annular filter member 8 also rotates therewith. The annular filter member 8 may be an annular plate provided with filter holes. In this way, the annular filter member 8 has a function of allowing a wind flow passing through the drying drum 5 to blow through the annular filter member 8, and the annular filter member 8 can filter out impurities such as the lint carried in the wind flow and retain them on a side of the annular filter member 8 that faces its axis.

The support mechanism is arranged on the front panel 2, and the support mechanism is located between the front panel 2 and the drying drum 5. The support mechanism is provided with a lint cleaning member 6 and a lint collecting member, that is, the front panel 2, the support mechanism, the lint cleaning member 6 and the lint collecting member are fixedly connected together in a detachable or non-detachable manner so as to ensure that when the drying drum 5 and the annular filter member 8 rotate relative to the front panel 2, the lint cleaning member 6 and the lint collecting member are stationary relative to the front panel 2, so that the annular filter member 8 rotates relative to the lint cleaning member 6 and the lint collecting member.

The lint cleaning member 6 is arranged to be capable of cleaning up the lint on the annular filter member 8 when the annular filter member 8 rotates, and the lint collecting member collects impurities such as the lint cleaned up by the lint cleaning member 6. The lint cleaning member 6 and the lint collecting member of the present embodiment can be arranged on the side of the annular filter member 8 that faces its axis. The lint cleaning member 6 may be a brush, a scraper 62 or other structures that can clean up impurities such as the lint.

In a case where the clothing drying apparatus of the present embodiment is in use, when the wind flow in the drying drum 5 passes through the annular filter member 8, the annular filter member 8 will filter out the impurities such as the lint carried in the wind flow and retain them, and the lint cleaning member 6 arranged on the support mechanism will remove the lint and other impurities retained on the annular filter member 8 to the interior of the lint collecting member so as to collect and process the lint and other impurities in a centralized manner, thus preventing the lint and other impurities from blocking an air duct of the clothing drying apparatus to affect the normal use of the clothing drying apparatus. In addition, since the lint cleaning member 6 and the lint collecting member are both hidden inside the support mechanism, clothing throw-in will not be hindered, so that the structure of the clothing drying apparatus of the present embodiment has the advantages of being concise and aesthetically beautiful.

In addition, In the clothing drying apparatus provided by the present embodiment, the lint cleaning member 6 and the lint collecting member are both arranged on the installation member, and the installation member is arranged on the cabinet assembly, so that the lint cleaning member 6 and the lint collecting member are arranged at concentrated positions in the clothing dryer and occupy a smaller space, which is advantageous for optimizing the overall layout of the clothing dryer and makes the overall structure of the clothing dryer concise, while also improving the user experience in use.

As shown in FIGS. 1, 2, 3, 4, 5, 6 and 7, as a preferred implementation of the above clothing drying apparatus provided by the present embodiment, the support mechanism includes a first support member 41 and a second support member 42 that are connected; at least one of the first support member 41 and the second support member 42 is provided on the front panel 2, and the first support member 41 and the second support member 42 together form an annular cavity that communicates the air duct of the clothing drying apparatus with an interior of the drying drum 5; the lint cleaning member 6 and the lint collecting member are both arranged on the second support member 42, the lint collecting member is completely located inside the annular cavity, and at least a part of the annular filter member 8 is arranged inside the annular cavity.

Exemplarily, the first support member 41 and the second support member 42 are connected to each other, and at least one of the first support member 41 and the second support member 42 is provided on the front panel 2, so that the first support member 41 and the second support member 42 are both fixed relative to the front panel 2. Further, the first support member 41 and the second support member 42 are coaxial, and the first support member 41 may be arranged outside of the second support member 42 so that the first support member 41 and the second support member 42 together form the annular cavity.

A side wall of the second support member 42 may be provided with an opening portion, so that the lint cleaning member 6 and the lint collecting member can be both arranged on the second support member 42 through the opening portion of the second support member 42, and that both the lint cleaning member 6 and the lint collecting member are located in an interior of the annular cavity formed by the first support member 41 and the second support member 42 together.

The support mechanism formed by the first support member 41 and the second support member 42 can be provided with an annular gap on a side toward the annular filter member 8, so that at least a part of the annular filter member 8 can be arranged in the interior of the annular cavity formed by the first support member 41 and the second support member 42 together.

A plurality of through holes can be formed on the side wall of the second support member 42, so that the wind flow in the drying drum 5 enters the annular cavity through the plurality of through holes provided on the second support member 42. The wind flow entering the annular cavity further passes through the annular filter member 8, and then enters an exhaust duct of the clothing drying apparatus from an opening formed at a lower part of the first support member 41. In this process, the annular filter member 8 filters out and retains impurities such as the lint, thus preventing impurities such as the lint from entering the exhaust duct to cause blockage of the exhaust duct and affect wind outflow. Moreover, when the annular filter member 8 rotates with the drying drum 5, the lint cleaning member 6 removes impurities such as the lint on the annular filter member 8 into the lint collecting member.

As shown in FIGS. 1, 2, 3, 7 and 8, the second support member 42 includes an annular support frame 421 connected with the first support member 41, and an installation box 422 arranged on the annular support frame 421. The installation box 422 is completely located inside the annular cavity, and the lint cleaning member 6 and the lint collecting member are both arranged on the installation box 422.

The installation box 422 can be completely arranged inside the annular cavity at a position corresponding to the opening portion on the side wall of the second support member 42, and then the lint cleaning member 6 and the lint collecting member are both arranged on the installation box 422, so as to fix the lint cleaning member 6 and the lint collecting member.

As a preferred implementation of the above clothing drying apparatus provided by the present embodiment, the lint cleaning member 6 includes a connecting rod 61 and a scraper 62 that are connected, the connecting rod 61 is snap-fit on the installation member, and the scraper 62 is arranged close to or against the annular filter member 8.

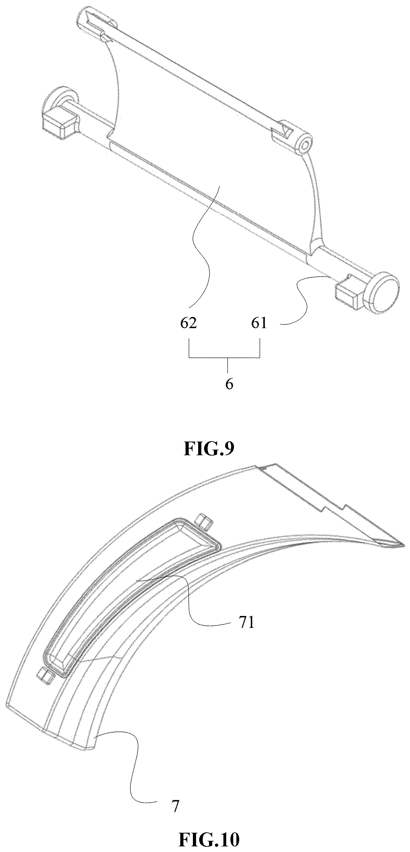

Exemplarily, as shown in FIG. 9, one end of the scraper 62 is provided on the connecting rod 61, and the scraper 62 can be integrally formed with the connecting rod 61 or fixedly connected with the connecting rod 61 by means of bonding or the like. Two ends of the connecting rod 61 are then snap-fit on the installation box 422, so that the lint cleaning member 6 is detachably connected with the installation box 422. When the lint cleaning member 6 is damaged, the lint cleaning member 6 can be conveniently replaced, so as to ensure that impurities such as the lint on the annular filter member 8 can be effectively cleaned up.

In the process of cleaning up impurities such as the lint on the annular filter member 8 by the scraper 62, the wind flow entering the annular cavity has carried moisture and impurities such as the lint simultaneously, and the impurities such as the lint are easier to stick to the annular filter member 8 in this situation. Since the impurities such as the lint that may cause the blockage of the exhaust duct have a certain size, and the impurities such as the lint accumulated on the annular filter member 8 have a certain thickness, if the scraper 62 abuts against the annular filter member 8 or a certain gap is provided between the scraper 62 and the annular filter member 8, the scraper 62 in each case can contact with the impurities such as the lint and remove them into the lint collecting member.

As shown in FIGS. 1, 8 and 9, as a preferred implementation of the above clothing drying apparatus provided by the present embodiment, the lint collecting member includes a lint collecting box 7 which is detachably connected with the installation member, and a lint collecting port of the lint collecting box 7 is located below the lint cleaning member 6.

Exemplarily, since the lint collecting box 7 is detachably connected with the installation box 422, when it is necessary to process impurities such as the lint in the lint collecting box 7, the lint collecting box 7 can be removed from the installation box 422 to facilitate the processing of the collected lint and other impurities.

The lint collecting port of the lint collecting box 7 is located below the lint cleaning member 6, which is advantageous for the impurities such as the lint cleaned up from the lint cleaning member 6 to fall into the lint collecting box 7 under its own gravity.

As shown in FIGS. 1 and 10, as a preferred implementation of the above clothing drying apparatus provided by the present embodiment, the lint collecting port is arranged gradually opened in a direction approaching the lint cleaning member 6.

Exemplarily, the lint collecting port is arranged gradually opened in a direction approaching the lint cleaning member 6, so that an opening of the lint collecting port of the lint collecting box 7 is gradually increased, thereby facilitating impurities such as the lint to fall into the lint collecting box 7 through the larger opening of the lint collecting port.

As a preferred implementation of the above clothing drying apparatus provided by the present embodiment, the annular filter member 8 includes an annular filter bracket 81 and an annular filter screen, the annular filter bracket 81 is connected with the drying drum 5, and the annular filter screen is detachably connected with the annular filter bracket 81.

Exemplarily, the annular filter screen in this implementation is detachably connected with the annular filter bracket 81, so that when the annular filter screen is damaged, it is convenient to replace it. The annular filter screen can be formed by a long-strip-shaped filter screen connected at two ends, and the connection may also be made detachable. When replacing the annular filter screen, the two ends of the annular filter screen may be separated first to form a long-strip-shaped filter screen, thereby facilitating the replacement of the annular filter screen.

As a preferred implementation of the above clothing drying apparatus provided by the present embodiment, the annular filter bracket 81 is formed with an annular accommodating groove, the annular filter bracket 81 is provided with a plurality of snap-fit members, and the annular filter screen is snap-fit in the annular accommodating groove through the plurality of snap-fit members.

Exemplarily, the annular filter screen in this implementation is snap-fit in the corresponding annular accommodating groove of the annular filter bracket 81 through the plurality of snap-fit members, so as to realize the detachable connection of the annular filter screen and the annular filter bracket 81.

As a preferred implementation of the above clothing drying apparatus provided by the present embodiment, an inner surface of the annular filter screen is set flush with an inner surface of the annular filter bracket 81.

Exemplarily, in the clothing dryer provided by this implementation, the inner surface of the annular filter screen may be set flush with the inner surface of the annular filter bracket 81, so that the clothing dryer is overall neat and tidy, which improves the user experience in use.

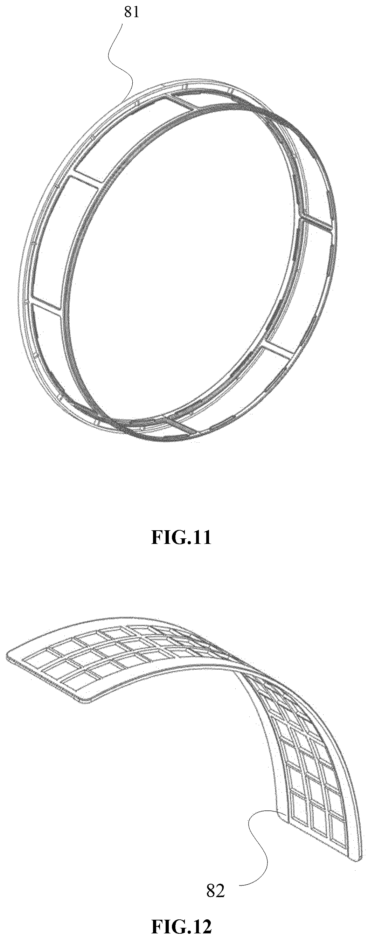

As shown in FIGS. 1, 2, 3, 4, 11 and 12, as a preferred implementation of the above clothing drying apparatus provided by the present embodiment, the annular filter screen includes a plurality of arc-shaped filter screens 82, the plurality of arc-shaped filter screens 82 are all detachably connected with the annular filter bracket 81, and the plurality of arc-shaped filter screens 82 are arranged in sequence in a circumferential direction of the annular filter bracket 81.

Exemplarily, this implementation realizes the fixed connection of the annular filter member 8 integrally with the drying drum 5 by connecting the annular filter bracket 81 with the drying drum 5; and the arc-shaped filter screens 82 are detachably connected with the annular filter bracket 81, so that when the arc-shaped filter screen 82 is damaged, the replacement thereof is made easy. The plurality of arc-shaped filter screens 82 are arranged in sequence in the circumferential direction of the annular filter bracket 81, so that the size of a single filter screen is small and the detachment is convenient.

As a preferred implementation of the above clothing drying apparatus provided by the present embodiment, arc lengths of all the arc-shaped filter screens 82 are equal.

Exemplarily, the arc lengths of all the arc-shaped filter screens 82 are equal to ensure that the specifications of each arc-shaped filter screen 82 are the same, so that the processing, replacement and installation procedures of the arc-shaped filter screens 82 become simple, while also reducing the production cost.

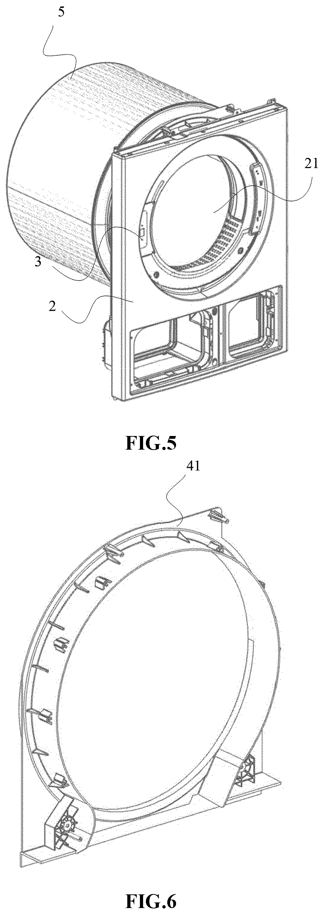

As shown in FIG. 5, as a preferred implementation of the above clothing drying apparatus provided by the present embodiment, the clothing drying apparatus is a front-open drum clothing dryer.

It can be understood by those skilled in the art that in the above embodiment, the clothing drying apparatus is described in an example in which the lint cleaning member and the lint collecting member are both arranged on the installation member, and the installation member is fixed through cooperation of a second positioning structure with a first positioning structure provided on the cabinet assembly so that the positions where the lint cleaning member and the lint collecting member are arranged in the clothing dryer are concentrated. However, the scope of protection of the present disclosure is not limited to the contents disclosed in the above embodiment. Those skilled in the art can make various adjustments and combinations to the above arrangements without departing from the principle of optimizing the overall layout of the clothing dryer of the present disclosure, so that the present disclosure can be applied to more specific application scenes.

For example, in an alternative implementation, as shown in FIG. 10, a gripping structure 71 is formed on an outer wall of a rear side of the lint collecting box 7. The gripping structure 71 is formed on the outer wall of the rear side (i.e., a side facing the drum) of the lint collecting box 7, and the gripping structure 71 may be a structure such as a groove or a protrusion that facilitates manually pulling the lint collecting box 7.

For another example, the lint collecting member is arranged on a left portion or a right portion inside the support mechanism. On the basis that the lint cleaning member 6 and the lint collecting member are arranged inside the support mechanism as described above, the lint collecting member is further arranged on the left or right portion inside the support mechanism; moreover, since the lint collecting port of the lint collecting box 7 is located below the lint cleaning member 6, the lint cleaning member 6 can clean up the lint on the upper left or upper right of the annular filter member 8, so that the lint will fall into the interior of the lint collecting member as the annular filter member 8 rotates. As shown in FIGS. 1, 2, 3, 4 and 7, the lint collecting member is arranged on the right portion inside the support mechanism. When the drying drum 5 and the annular filter member 8 rotate clockwise, the lint cleaning member 6 can clean up the lint on the upper right of the annular filter member 8, and the lint falls into the interior of the lint collecting member as the annular filter member 8 rotates.

For still another example, in another alternative implementation, as shown in FIG. 5, the front panel 2 has a door lock 31 and a door hinge 32 thereon, and the door lock 31 and the door hinge 32 are respectively arranged on left and right sides of the clothing throw-in port 21. The arrangement position of the lint collecting member inside the support mechanism corresponds to the arrangement position of the door hinge 32 on the front panel 2. A lock hook and a lock body of the door lock 31 need to occupy a certain space on the left side of the clothing throw-in port 21. Therefore, the present embodiment makes full use of the space on the right side of the clothing throw-in port 21 corresponding to the door hinge 32, so that the arrangements of the door lock 31 and the lint collecting member do not affect each other. One end of the front cover plate 1 is connected to the front panel 2 through the door hinge 32, and the other end of the front cover plate 1 matches with the opposite side of the front panel 2 through the door lock 31.

## Claims

1. A clothing drying apparatus, wherein the clothing drying apparatus comprises a cabinet assembly, an installation box (422), a drying drum (5), a lint cleaning member (6), a lint collecting member and an annular filter member (8); the annular filter member (8) is connected to the drying drum (5) and can rotate when driven by the drying drum (5);
wherein the installation box (422) is arranged on the cabinet assembly, and the lint cleaning member (6) and the lint collecting member are both arranged on the installation box (422);
during the rotation of the annular filter member (8), the lint cleaning member (6) can clean up the lint on the annular filter member (8), and the lint collecting member can collect the cleaned up lint;
the lint cleaning member (6) comprises a connecting rod (61) and a scraper (62) that are connected, the connecting rod (61) is snap-fit on the installation box (422), and the scraper (62) is arranged close to or against the annular filter member (8); and
the lint collecting member comprises a lint collecting box (7) which is detachably connected with the installation box (422), and a lint collecting port of the lint collecting box (7) is located below the lint cleaning member (6).

2. The clothing drying apparatus according to claim 1, **characterized in that** the lint collecting port is arranged gradually opened in a direction approaching the lint cleaning member (6).

3. The clothing drying apparatus according to any one of claims 1 to 2, **characterized in that** the annular filter member (8) comprises an annular filter bracket (81) and an annular filter screen (82), the annular filter bracket (81) is connected with the drying drum (5), and the annular filter screen (82) is detachably connected with the annular filter bracket (81).

4. The clothing drying apparatus according to claim 3, **characterized in that** the annular filter bracket (81) is formed with an annular accommodating groove, the annular filter bracket (81) is provided with a plurality of snap-fit members, and the annular filter screen (82) is snap-fit in the annular accommodating groove through the plurality of snap-fit members.

5. The clothing drying apparatus according to any one of claims 3 to 4, **characterized in that** an inner surface of the annular filter screen (82) is set flush with an inner surface of the annular filter bracket (81).

6. The clothing drying apparatus according to any one of claims 3 to 5, **characterized in that** the annular filter screen (82) comprises a plurality of arc-shaped filter screens, the plurality of arc-shaped filter screens are all detachably connected with the annular filter bracket (81), and the plurality of arc-shaped filter screens are arranged in sequence in a circumferential direction of the annular filter bracket (81).

7. The clothing drying apparatus according to any one of claim 6, **characterized in that** arc lengths of all the arc-shaped filter screens are equal.

8. The clothing drying apparatus according to any one of claims 1 to 7, **characterized in that** the clothing drying apparatus is a front-open drum clothing dryer.

## Patentansprüche

1. Ein Bekleidungsgetrocknungsgerät, wobei das Bekleidungsgetrocknungsgerät eine Schrankvorrüstung, eine Installationsbox (422), einen Trocknungstrog (5), eine Faserreinigungsvorrichtung (6), eine Fasersammelvorrichtung und einen ringförmigen Filter (8) umfasst; der ringförmige Filter (8) ist mit dem Trocknungstrog (5) verbunden und kann sich drehen, wenn er vom Trocknungstrog (5) angetrieben wird;
wobei die Installationsbox (422) auf dem Schrankaggregat angeordnet ist und sowohl das Schmutzwollreinigungselement (6) als auch das Schmutzwollsammlungselement auf der Installationsbox (422) angeordnet sind;
Während der Rotation des ringförmigen Filterelements (8) kann das Staubreinigungselement (6) den Staub auf dem ringförmigen Filterelement (8) reinigen, und das Staubsammelelement kann den gereinigten Staub aufnehmen.
Das Staubreinigungselement (6) umfasst eine Verbindungsstange (61) und einen Wischer (62), die miteinander verbunden sind, wobei die Verbindungsstange (61) schnappverschlossen auf der Installationsbox (422) angebracht ist und der Wischer (62) nahe oder gegen das ringförmige Filterelement (8) angeordnet ist; und
Der Staubfang besteht aus einer abnehmbaren Staubfangbox (7), die mit der Montagebox (422) verbunden ist, und ein Staubfanganschluss der Staubfangbox (7) befindet sich unterhalb des Staubreinigungsteils (6).

2. Die Bekleidungstrocknungsanlage nach Anspruch 1, **dadurch gekennzeichnet, dass** der Staubabsauganschluss schrittweise in Richtung des Staubreinigungsmittels (6) angeordnet ist.

3. Die Bekleidungstrocknungsanlage nach einem der Ansprüche 1 bis 2, **dadurch gekennzeichnet, dass** das ringförmige Filterteil (8) ein ringförmiges Filterträger (81) und ein ringförmiges Filtersieb (82) umfasst, wobei das ringförmige Filterträger (81) mit dem Trocknungstrockner (5) verbunden ist und das ringförmige Filtersieb (82) verschraubbar mit dem ringförmigen Filterträger (81) verbunden ist.

4. Die Bekleidungsgetrocknungsanlage nach Anspruch 3, **dadurch gekennzeichnet, dass** die ringförmige Filterhalterung (81) mit einer ringförmigen Aufnahmegrube ausgebildet ist, die ringförmige Filterhalterung (81) mit mehreren Klickverbindungsstücken versehen ist und die ringförmige Filtermaske (82) durch die mehreren Klickverbindungsstücke in der ringförmigen Aufnahmegrube klickverbindbar ist.

5. Die Kleidungsgetrocknungsanlage nach einem der Ansprüche 3 bis 4, **dadurch gekennzeichnet, dass** eine innere Oberfläche des ringförmigen Filtergitters (82) mit einer inneren Oberfläche des ringförmigen Filterträgers (81) in gleicher Ebene angeordnet ist.

6. Die Bekleidungsgetrocknungsanlage nach einem der Ansprüche 3 bis 5, **dadurch gekennzeichnet, dass** das ringförmige Filternetz (82) aus einer Vielzahl von bogenförmigen Filternetzen besteht, wobei die Vielzahl von bogenförmigen Filternetzen alle verschraubt mit dem ringförmigen Filterträger (81) verbunden sind und die Vielzahl von bogenförmigen Filternetzen in sequentieller Anordnung in Umfangsrichtung des ringförmigen Filterträgers (81) angeordnet sind.

7. Die Kleidungsgetrocknungsanlage nach Anspruch 6, **dadurch gekennzeichnet, dass** die Bogenlängen aller bogenförmigen Filternetze gleich sind.

8. Die Kleidergetrocknungsanlage nach einem der Ansprüche 1 bis 7, **dadurch gekennzeichnet, dass** die Kleidergetrocknungsanlage ein Frontbelüftungstrockner ist.

## Revendications

1. Un appareil de séchage de vêtements, dans lequel l'appareil de séchage de vêtements comprend un ensemble de placard, une boîte d'installation (422), un tambour de séchage (5), un membre de nettoyage de peluche (6), un membre de collecte de peluche et un membre de filtre annulaire (8) ; le membre de filtre annulaire (8) est connecté au tambour de séchage (5) et peut tourner lorsqu'il est entraîné par le tambour de séchage (5) ;
où la boîte d'installation (422) est disposée sur l'ensemble de l'armoire, et le membre de nettoyage des pelotes (6) ainsi que le membre de collecte des pelotes sont tous deux disposés sur la boîte d'installation (422) ;
Pendant la rotation du membre de filtre annulaire (8), le membre de nettoyage de la pelote (6) peut nettoyer la pelote sur le membre de filtre annulaire (8), et le membre de collecte de la pelote peut collecter la pelote nettoyée.
le membre de nettoyage de la peluche (6) comprend une tige de liaison (61) et un grattoir (62) qui sont connectés, la tige de liaison (61) est encastrée sur la boîte de montage (422), et le grattoir (62) est disposé à proximité ou contre le membre de filtration annulaire (8) ; et
Le membre de collecte de peluche comprend une boîte de collecte de peluche (7) qui est connectée de manière détachable à la boîte d'installation (422), et un orifice de collecte de peluche de la boîte de collecte de peluche (7) est situé en dessous du membre de nettoyage de peluche (6).

2. L'appareil de séchage de vêtements selon la revendication 1, **caractérisé en ce que** l'orifice de collecte des peluches est disposé de manière à s'ouvrir progressivement dans une direction approchant le membre de nettoyage des peluches (6).

3. L'appareil de séchage de vêtements selon l'une quelconque des revendications 1 à 2, **caractérisé en ce que** le membre de filtration annulaire (8) comprend un support de filtration annulaire (81) et un écran de filtration annulaire (82), le support de filtration annulaire (81) étant connecté au tambour de séchage (5), et l'écran de filtration annulaire (82) étant connecté de manière détachable au support de filtration annulaire (81).

4. L'appareil de séchage des vêtements selon la revendication 3, **caractérisé en ce que** le support de filtre annulaire (81) est formé d'une rainure d'accueil annulaire, le support de filtre annulaire (81) est équipé de plusieurs éléments de verrouillage, et le filtre annulaire (82) est verrouillé dans la rainure d'accueil annulaire à travers les plusieurs éléments de verrouillage.

5. L'appareil de séchage des vêtements selon l'une quelconque des revendications 3 à 4, **caractérisé en ce qu'**une surface intérieure du treillis filtrant annulaire (82) est réglée à ras avec une surface intérieure du support de filtre annulaire (81).

6. L'appareil de séchage de vêtements selon l'une quelconque des revendications 3 à 5, **caractérisé en ce que** le tamis filtrant annulaire (82) comprend plusieurs tamis filtrants en forme d'arc, lesdits tamis filtrants en forme d'arc étant tous connectés de manière détachable au support de filtre annulaire (81), et lesdits tamis filtrants en forme d'arc étant disposés en séquence dans une direction circonférentielle du support de filtre annulaire (81).

7. L'appareil de séchage de vêtements selon la revendication 6, **caractérisé en ce que** les longueurs d'arc de tous les écrans filtrants en forme d'arc sont égales.

8. L'appareil de séchage de vêtements selon l'une quelconque des revendications 1 à 7, **caractérisé en ce que** l'appareil de séchage de vêtements est un séchoir à linge à tambour ouvert par l'avant.
